# EUROPÄISCHE PATENTSCHRIFT

(11) **EP 2 437 084 B1**
(45) Veröffentlichungstag und Bekanntmachung des Hinweises auf die Patenterteilung: **12.12.2012**
(21) Anmeldenummer: 11183135.0
(22) Anmeldetag: 28.09.2011
(51) Int. Cl.: G02B 1/04, G02B 1/11

(54) **Optische Linse mit kratzfester Entspiegelungsschicht**
Optical lens with anti-scratch, anti-reflective layer
Lentille optique avec revêtement anti-rayure et anti-refléchissant

(30) Priorität: 01.10.2010 DE 102010048088; 01.10.2010 US 389019 P
(43) Veröffentlichungstag der Anmeldung: 04.04.2012
(73) Patentinhaber: Carl Zeiss Vision International GmbH, 73430 Aalen (DE)
(72) Erfinder: Neuffer, Andreas, 71679 Asperg (DE)
(74) Vertreter: Witte, Weller & Partner

(56) Entgegenhaltungen:
- FR-A1- 2 858 420
- FR-A1- 2 917 510
- JP-A- 2009 093 068
- US-A1- 2008 206 470
- STEFFEN RUNKEL ET AL: "Inline-Beschichtung von optischen SubstratenInline coating of optical substrates", VAKUUM IN FORSCHUNG UND PRAXIS, Bd. 17, Nr. 5, 1. Oktober 2005 (2005-10-01), Seiten 246-251, XP55016099, ISSN: 0947-076X, DOI: 10.1002/vipr.200500264

## Beschreibung

Die vorliegende Erfindung betrifft eine optische Linse mit einem aus, insbesondere in einem sichtbaren Spektralbereich transparenten, Kunststoff hergestellten Linsenelement, und mit einer mehrere Schichten aufweisenden Beschichtung, wobei die mehreren Schichten zumindest eine hochbrechende Schicht aufweisen.

Eine solche optische Linse ist beispielsweise aus der Druckschrift EP 0 698 798 A2 bekannt.

Bei optischen Linsen, insbesondere bei Brillengläsern, wird heutzutage als Material anstatt eines Silikatglases immer öfter ein im sichtbaren Spektralbereich transparenter Kunststoff verwendet. Gegenüber dem Silikatglas bietet der Kunststoff die Vorteile eines geringeren Gewichts, einer höheren Bruchfestigkeit, einer Färbbarkeit und der Möglichkeit der Anbringung einer randlosen Fassung. Ein bekannter Nachteil von optischen Linsen aus Kunststoff ist jedoch die viel höhere Anfälligkeit der Oberfläche gegenüber mechanischen Belastungen, insbesondere einer Beschädigung durch Verkratzen.

Um diese Anfälligkeit gegenüber mechanischen Belastungen bei optischen Linsen aus Kunststoff zu minimieren, wird auf den Kunststoff eine Beschichtung aufgetragen, die die optische Linse vor mechanischen Einwirkungen schützen soll. In der Regel übernimmt ein Hartlack diese schützende Funktion. Der Hartlack muss ebenfalls im sichtbaren Bereich transparent sein und eine Brechzahl nahe der optischen Linse aufweisen, um eine gute optische Durchlässigkeit zu gewährleisten und unerwünschte Farbinterferenzen zu vermeiden. Typische Materialien für Hartlacke sind etwa Siloxane oder eine organisch modifizierte Keramik, bei der in eine Polysiloxanmatrix statt eines Sauerstoffatoms ein Metallatom, etwa Titan, eingebaut ist.

Des Weiteren ist es bekannt, die optischen Linsen mit sogenannten Entspiegelungsschichten zu versehen, um störende Spiegelungen zu vermeiden. Hier bei handelt es sich in der Regel um eine Schichtfolge, in der alternierend Schichten mit einem ersten Brechungsindex und Schichten mit einem zweiten, gegenüber dem ersten Brechungsindex höheren zweiten Brechungsindex aufgetragen sind. In der eingangs genannten Druckschrift EP 0 698 798 A2 wurde bereits vorgeschlagen, diese beispielsweise aus anorganischen, oxidischen und optisch transparenten Materialien bestehenden Entspiegelungsschichten mit in das Konzept der Beschichtung zum Schutz gegenüber mechanischer Belastung einzubinden.

In der EP 0 698 798 A2 wird eine Beschichtung vorgeschlagen, die Borosilikatglas aufweist, das mittels eines PVD (Physical Vapour Deposition)-Verfahrens auf die Gläser aufgedampft wird. Die Beschichtung soll eine Dicke von bis zu 3 µm als Kratzschutz aufweisen. Eine solche Schicht schützt zwar die aus Kunststoff ausgebildete Linse vor mechanischen Einflüssen wie Kratzern, sie verhindert jedoch nicht, dass die Schichten unter oder auf dieser Schicht zur Bereitstellung eines Kratzschutzes, also insbesondere die Entspiegelungsschichten, ihrerseits verkratzt werden können und so zu trüben und lichtstreuenden Schichten führen können.

Eine Aufgabe der vorliegenden Erfindung ist es daher, eine optische Linse, insbesondere ein Brillenglas, mit einer Beschichtung bereitzustellen, die neben guten Entspiegelungseigenschaften unanfällig gegenüber mechanischen Belastungen ist.

Erfindungsgemäß wird daher vorgeschlagen, die eingangs genannte optische Linse dahingehend weiterzubilden, dass eine superhydrophobe Schicht die Beschichtung, insbesondere entgegensetzt zu dem Linsenelement, abschließt, dass die zumindest eine hochbrechende Schicht, insbesondere insgesamt, eine Dicke von weniger als 40 nm, insbesondere weniger als 36 nm, aufweist, und dass die Beschichtung insgesamt eine Dicke von mehr als etwa 380 nm aufweist.

Vorgesehen ist somit, dass eine Gesamtschichtdicke der hochbrechenden Schichten weniger als 40 nm, insbesondere weniger als 36 nm, beträgt. Im Falle genau einer hochbrechenden Schicht weist somit die genau eine hochbrechende Schicht eine Dicke von weniger als 40 nm auf, und im Falle von mehr als einer hochbrechenden Schicht (bzw. mindestens zwei hochbrechenden Schichten) weisen die hochbrechenden Schichten zusammen (bzw. insgesamt) eine Dicke von weniger als 40 nm auf.

Somit wird zum einen ein optische Linse mit einem aus, insbesondere in einem sichtbaren Spektralbereich transparenten, Kunststoff hergestellten Linsenelement, und mit einer mehrere Schichten aufweisenden Beschichtung bereitgestellt, wobei die mehreren Schichten genau eine hochbrechende Schicht aufweisen, wobei an das Linsenelement angrenzend eine Hartlackschicht ausgebildet ist, wobei eine superhydrophobe Schicht die Beschichtung abschließt, wobei die genau eine hochbrechende Schicht eine Dicke von weniger als 40 nm aufweist, und wobei die Beschichtung insgesamt eine Dicke von mehr als etwa 380 nm aufweist.

Somit wird zum anderen ein optische Linse mit einem aus, insbesondere in einem sichtbaren Spektralbereich transparenten, Kunststoff hergestellten Linsenelement, und mit einer mehrere Schichten aufweisenden Beschichtung bereitgestellt, wobei die mehreren Schichten zumindest zwei hochbrechende Schichten aufweisen, wobei an das Linsenelement angrenzend eine Hartlackschicht ausgebildet ist, wobei eine superhydrophobe Schicht die Beschichtung abschließt, wobei die zumindest zwei hochbrechenden Schichten insgesamt eine Dicke von weniger als 40 nm aufweisen, und wobei die Beschichtung insgesamt eine Dicke von mehr als etwa 380 nm aufweist.

Die Anfälligkeit von optischen Oberflächen gegenüber einem Verkratzen wird in der Brillenglasherstellung mit dem sogenannten Bayer-Test von Colts Laboratories gemessen, bei dem eine bestimmte Menge scharfkantiger Teilchen über die Oberfläche des Brillenglases geführt wird und anschließend das Brillenglas optisch ausgewertet wird. Bei diesem Bayer-Test der Colts Laboratories wird über die am Boden einer kleinen Wanne befestigten Test- und Referenzgläser, die unbeschichtete Standard-CR39 Brillengläser mit 0 Dioptrien optischer Stärke sind, durch seitliche Bewegung der Wanne ein abrasives Material geführt. Anschließend werden die Testgläser ausgewertet, d.h. es wird die Quantität des durch das Verkratzen erzeugten Streulichts gemessen. Das Ergebnis des Tests ist eine Zahl, die angibt, um wie viel widerstandsfähiger die getestete Linse gegenüber der Referenzlinse aus unbeschichtetem CR39 ist. Bei CR39 handelt es sich um Polyallyldiglycolcarbonat.

Die hier vorgestellte Erfindung löst das Problem der mechanischen Belastbarkeit der aus einem Kunststoff ausgebildeten optischen Linse mit einer speziellen, optisch breitbandigen Entspiegelungsschicht derart, dass bei Anwendung des Bayer-Tests nur ein minimal erhöhtes Streulicht erzeugt wird, was sich in Bayer-Werten von > 17 ausdrückt.

Die optische Linse mit der entsprechenden Beschichtung kann mittels eines an sich bekannten PVD-Prozesses hergestellt werden. Alternativ sind auch andere bekannte Prozesse zur Erzielung solcher Dünnschichtsysteme denkbar, z.B. CVD (Chemical Vapour Deposition)-Prozesse aber auch ionen- oder plasmaunterstützte Varianten der voranstehend genannten Prozesse.

Unter "hochbrechend" wird vorliegend ein Material, insbesondere eine Schicht aus einem Material, mit einem Brechungsindex von n > 1,65, insbesondere bei einer Wellenlänge von 550nm, verstanden. Bis zu diesem Brechungsindex, auch hinsichtlich der verwendeten Substrate mit einem Brechungsindex beispielsweise von 1,6 oder 1,67, wirken die Schichten nur wenig oder gar nicht als streuendes Medium für Licht. Insbesondere sind Schichten aus den folgenden Materialien hochbrechende Schichten und können die hochbrechenden Schichten bilden: CeO₂, Cr₂O₃, HfO₂, ITO, Mischung La₂O₃- Nb₂O₅, Mischung La₂O₃-TiO₂, Nb₂O₅, Mischung Al₂O₃-Pr₆O₁₁, Mischung Al₂O₃-Pr₆O₁₁, Sc₂O₃, SiO, Ta₂O₅, TiO₂, Mischung TiO₂-Al₂O₃, Ti-Pr-oxide, Y₂O₃, ZrO, ZrO₂, Mischung ZrO₂-TaO₂, Mischung ZrO₂-TiO₂, ZnS, Mischung ZrO₂-Y₂O₃, SiOₓN_{y}, SiNₓ, Si₃N₄, sowie Schichten aus Mischungen dieser Materialien und/oder über- bzw. unterstöchiometrischen Abweichungen dieser Materialien.

Sind mehr als eine hochbrechende Schicht vorgesehen, können grundsätzlich alle hochbrechenden Schichten der optischen Linse aus demselben Material gebildet sein. Es kann aber auch vorgesehen sein, dass die hochbrechenden Schichten aus verschiedenen der voranstehend genannten Materialien gebildet sind.

Unter "mittelbrechend" kann vorliegend eine Schicht aus einem Material mit einem Brechungsindex von 1,5 < n =< 1,65 bei einer Wellenlänge von 550nm verstanden werden. Insbesondere sind Schichten aus den folgenden Materialien mittelbrechende Schichten und können die mittelbrechenden Schichten bilden: Al₂O₃, MgO, Mischung Al₂O₃-Pr₆O₁₁, WO₃ sowie Schichten aus Mischungen dieser Materialien und/oder über- bzw. unterstöchiometrischen Abweichungen dieser Materialien.

Unter "niedrigbrechend" kann vorliegend eine Schicht aus einem Material mit einem Brechungsindex von n =< 1,5 bei einer Wellenlänge von 550nm verstanden werden. Insbesondere sind Schichten aus den folgenden Materialien niedrigbrechende Schichten und können die niedrigbrechenden Schichten bilden: SiO₂, Mischung SiO₂-Al₂O₃, BaF₂, CaF₂, Na₃AlF₆, MgF₂, YbF₃, Mischung YbF₃- CaF₂, YF₃, Mischung YF₃- BaF₂ sowie Schichten aus Mischungen dieser Materialien und/oder über- bzw. unterstöchiometrischen Abweichungen dieser Materialien.

Die eingangs gestellte Aufgabe wird somit vollkommen gelöst.

Um eine hohe Kratzbeständigkeit, d.h. einen Bayerwert > 17, mit gleichzeitig guten Entspiegelungseigenschaften, d.h. im Wesentlichen einen Reflexionsgrad von weniger als 2,5% in einem sichtbaren Wellenlängenbereich, insbesondere in einem Bereich von 450nm bis 650nm, aufzuweisen, muss die optische Linse somit zunächst mit einem geeigneten Hartlack beschichtet werden. Auf diesen Hartlack kann dann ein mehrschichtiger Aufbau von Entspiegelungsschichten aufgetragen werden, der insgesamt eine Dicke von mehr als etwa 380 nm, insbesondere mehr als etwa 400 nm aufweist. Innerhalb dieser Entspiegelungsschichten müssen die hochbrechenden Schichten in Summe möglichst dünn bleiben. Insbesondere soll die zumindest eine hochbrechende Schicht eine Dicke von insgesamt nicht mehr als 40 nm, insbesondere nicht mehr als 35 nm, aufweisen.

Entgegengesetzt zu dem aus Kunststoff bestehenden Linsenelement sollte die Beschichtung dann mit einer superhydrophoben Schicht abschließen.

In einer bevorzugten Ausführungsform ist vorgesehen, dass die superhydrophobe Schicht aus einem Material gebildet ist, auf dem Wasser einen Randwinkel von mehr als 90° einnimmt, insbesondere kann vorgesehen sein, dass die superhydrophobe Schicht aus einem Material gebildet ist, auf dem Wasser einen Randwinkel von mehr als 95°, insbesondere 100°, einnimmt.

Bei einer solchen superhydrophoben Schicht wird die Gleitreibung zwischen der Schichtoberfläche und auf der Schichtoberfläche befindlichen Teilchen minimiert, was zum einen ein verbessertes Abperlen von Wasser auf der optischen Linse bewirkt und zum anderen eine Gleitreibung zwischen der Schichtoberfläche und den während des Bayer-Tests verwendeten Teilchen minimiert, was zu einem besseren Testergebnis führt.

In einer bevorzugten Ausführungsform kann vorgesehen sein, dass die Beschichtung genau eine hochbrechende Schicht aufweist. Insbesondere kann dabei vorgesehen sein, dass die genau eine hochbrechende Schicht eine Dicke von weniger als 20nm, insbesondere weniger als 15 nm, aufweist. Damit ergeben sich hinsichtlich der mechanischen Belastung deutlich bessere Eigenschaften.

In einer weiteren bevorzugten Ausführungsform kann vorgesehen sein, dass die Beschichtung zwei hochbrechende Schichten aufweist. Insbesondere kann eine der beiden hochbrechenden Schichten eine Dicke von etwa 10 nm aufweisen. Des Weiteren weisen die zwei hochbrechenden Schichten insgesamt bzw. zusammen eine Dicke von nicht mehr als 40 nm, insbesondere nicht mehr als 35 nm, auf.

In einer bevorzugten Ausführungsform kann vorgesehen sein, dass die zumindest eine hochbrechende Schicht aus ZrO₂, TiO₂ oder Ta₂O₅ gebildet ist.

Des Weiteren ist in einer bevorzugten Ausführungsform vorgesehen, dass die Beschichtung zumindest eine niedrigbrechende Schicht und/oder zumindest eine mittelbrechende Schicht aufweist. Die zumindest eine niedrigbrechende Schicht kann insbesondere aus SiO₂ oder MgF₂ gebildet sein. Auf diese Weise wird eine besonders gute Entspiegelungswirkung bei gleichzeitig mechanisch stabilem Aufbau erzielt.

In einer besonders vorteilhaften Ausgestaltung der Erfindung ist dabei vorgesehen, dass die zumindest eine hochbrechende Schicht zwischen zwei niedrigbrechenden Schichten oder zwischen zwei mittelbrechenden Schichten oder zwischen einer niedrigbrechenden Schicht und einer mittelbrechenden Schicht eingebettet bzw. angeordnet ist.

In einer bevorzugten Ausführungsform der Erfindung ist vorgesehen, dass eine Härte der mehreren Schichten von der Hartlackschicht aus in Richtung der superhydrophoben Schicht zunimmt. Mit anderen Worten sollte ein Gradient der Härte der Beschichtung von der Hartlackschicht aus in Richtung der superhydrophoben Schicht ansteigen. Es hat sich gezeigt, dass in diesem Fall ein deutlich besserer Bayer-Wert erzielt werden kann.

In einer Ausgestaltung der Erfindung ist vorgesehen, dass zwischen einer untersten der zumindest einen hochbrechenden Schicht und der Hartlackschicht zumindest zwei niedrigbrechende Schichten und zumindest zwei mittelbrechende Schichten abwechselnd angeordnet sind. Insbesondere kann dabei vorgesehen sein, dass drei mittelbrechende und zwei niedrigbrechende Schichten zwischen der untersten der zumindest einen hochbrechenden Schicht und der Hartlackschicht angeordnet sind. Alternativ kann auch vorgesehen sein, dass zwei mittelbrechende und drei niedrigbrechende Schichten zwischen der untersten der zumindest einen hochbrechenden Schicht und der Hartlackschicht angeordnet sind.

Des Weiteren kann in einer Ausgestaltung vorgesehen sein, dass die Schichten von der superhydrophoben Schicht bis einschließlich der untersten hochbrechenden Schicht, mindestens eine niedrigbrechende Schicht, mindestens eine mittelbrechende Schicht und mindestens eine hochbrechende Schicht aufweisen.

In einer bevorzugten Ausgestaltung der Erfindung ist vorgesehen, dass zwischen der superhydrophoben Schicht und der Hartlackschicht zumindest zwei aus SiO₂ gebildete Schichten und zumindest drei aus Al₂O₃ gebildete Schichten abwechselnd angeordnet sind, wobei eine der drei aus Al₂O₃ gebildeten Schichten an die Hartlackschicht angrenzt. Mit diesem Aufbau und bei Einhaltung der erfindungsgemäß angegebenen Dicken der unterschiedlichen Schichten und der Beschichtung kann bei guten Entspiegelungseigenschaften, d.h. einem Reflexionsgrad von im Wesentlichen unter 2,5% im sichtbaren Spektralbereich, ein gutes Testergebnis im Bayer-Test erzielt werden.

Es kann in einer weiteren Ausgestaltung der Erfindung vorgesehen sein, dass die zumindest eine hochbrechende Schicht einen Brechungsindex n > 1,65 aufweist. Des Weiteren kann vorgesehen sein, dass die zumindest eine mittelbrechende Schicht einen Brechungsindex 1,5 < n <= 1,65 aufweist, und dass die zumindest eine niedrigbrechende Schicht einen Brechungsindex n <= 1,5 aufweist.

In einer weiteren Ausgestaltung der Erfindung kann vorgesehen sein, dass die Beschichtung ausschließlich der Hartlackschicht insgesamt eine Dicke von mehr als etwa 380 nm aufweist. In diesem Fall gilt die Bedingung für die minimale Dicke der Beschichtung somit unter Ausschluss der Hartlackschicht. Es müssen dann bereits die superhydrophobe Schicht und die Entspiegelungsschichten, d.h. die niedrigbrechenden, mittelbrechenden und hochbrechenden Schichten, insgesamt eine Dicke von mehr als 380 nm aufweisen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Reflexkurve eines aus einem Kunststoff ausgebildeten Brillen-glases mit einem Brechungsindex n = 1,6 nach dem Stand der Tech-nik ohne und mit einer Breitbandentspiegelungsschicht.
- Fig. 2: eine schematische Ansicht einer erfindungsgemäßen optischen Linse,
- Fig. 3: eine schematische Ansicht einer weiteren Ausführungsform einer erfindungsgemäßen optischen Linse,
- Fig. 4: eine Reflexkurve der optischen Linse in Fig. 3,
- Fig. 5: eine schematische Ansicht noch einer weiteren Ausführungsform einer erfindungsgemäßen optischen Linse, und
- Fig. 6: eine Reflexkurve der optischen Linse in Fig. 5.

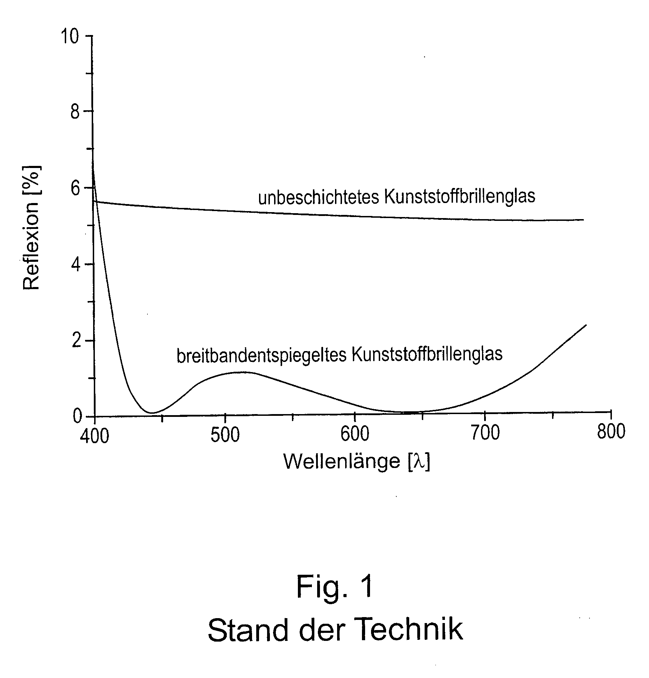

Fig. 1 zeigt eine Reflexkurve eines breitbandentspiegelten Kunststoffbrillenglases mit einem Brechungsindex n = 1,6 nach dem Stand der Technik im Vergleich zu einem unbeschichteten Kunststoffbrillenglas.

Üblicherweise weist eine Beschichtung einer solchen bekannten optischen Linse eine Vielzahl von aufeinanderfolgenden Schichten mit jeweils einem niedrigeren und einem höheren Brechungsindex und mit jeweils genau definierter Dicke auf. Insbesondere bei hochbrechenden Brillengläsern ist eine solche Breitbandentspiegelung wichtig, um störende Reflexionen zu verringern und zudem eine sehr gute Transmission zu ermöglichen. Üblicherweise sind dabei mehrere Schichten mit einem relativ hohen Brechungsindex vorgesehen, die zusammen mit den Schichten mit dem relativ niedrigen Brechungsindex die gewünschte Entspiegelung bewirken. Dabei beträgt die Gesamtschichtdicke der Schichten mit dem höheren Brechungsindex etwa 50 bis 150 nm. Entsprechend ist es das Ziel der Erfindung, eine optische Linse mit ähnlich guten Reflexionswerten bereitzustellen, die darüber hinaus einen möglichst hohen Bayer-Wert aufweist.

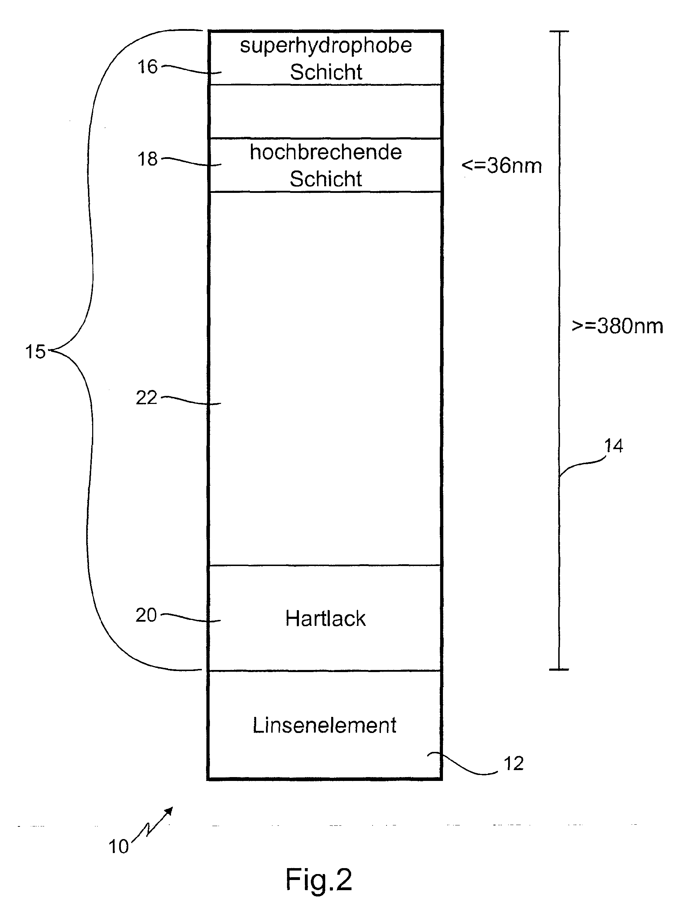

Fig. 2 zeigt entsprechend eine optische Linse 10, die gemäß der Lehre der vorliegenden Erfindung ausgebildet ist. Die optische Linse 10 weist ein in einem sichtbaren Spektralbereich transparentes Linsenelement 12 auf, das aus einem Kunststoff hergestellt ist. Dieses Linsenelement 12 ist mit einer Beschichtung 14 versehen, wobei die Beschichtung 14 mehrere Schichten 15 aufweist. Die Beschichtung 14 liegt dabei auf dem Linsenelement 12 auf. Entgegengesetzt zu dem Linsenelement 12 schließt die Beschichtung 14 mit einer superhydrophoben Schicht 16 ab. Entsprechend bildet die superhydrophobe Schicht 16, wenn man das Linsenelement 12 als "unten" liegend bezeichnet, die oberste Schicht der Beschichtung 14. Die superhydrophobe Schicht ist dabei aus einem Material ausgebildet, auf dem Wasser einen Randwinkel von mehr als 90°, insbesondere mehr als 100°, einnimmt.

Die mehreren Schichten 15 weisen des Weiteren zumindest eine hochbrechende Schicht 18 auf. Unter einer hochbrechenden Schicht wir hierbei verstanden, dass das Material einen Brechungsindex n > 1,65 aufweist.

Angrenzend an das Linsenelement 12 ist eine Hartlackschicht 20 ausgebildet. Übliche Materialien für diese Hartlackschicht 20 sind dem Fachmann bekannt und werden bereits im Stand der Technik verwendet.

Letztlich umfassen die mehreren Schichten 15 noch weitere Entspiegelungsschichten 22, die sowohl niedrigbrechende Schichten, mittelbrechende Schichten als auch weitere hochbrechende Schichten umfassen können. In der dargestellten Ausführungsform kommt dem genauen Aufbau dieser weiteren Entspiegelungsschichten 22 jedoch keine weitere Bedeutung bei und kann auch beliebig gewählt werden.

Der Hartlackschicht 20 kommt innerhalb der Beschichtung 14 zum einen die Funktion zu, dass die Hartlackschicht 20 als Spannungsausgleich zwischen den anorganischen Entspiegelungsschichten 18, 22 dient. Die Entspiegelungsschichten 18, 22 weisen einen relativ niedrigen Wärmeausdehnungskoeffizienten auf, wohingegen dem aus einem organischen Kunststoff hergestellten Linsenelement 12 ein hoher Wärmeausdehnungskoeffizient zukommt. Darüber hinaus bildet die dem Linsenelement 12 abgewandte Seite der Hartlackschicht 20 eine Oberfläche mit guter Haftfestigkeit für die Entspiegelungsschichten 22.

Um einen möglichst hohen Bayer-Wert zu erreichen, hat es sich gezeigt, dass die mehreren Schichten 15 mit einem von dem Linsenelement 12 zu der superhydrophoben Schicht 16 zunehmenden Härtegradienten aufgebracht werden sollten. In Versuchen hat sich gezeigt, dass der Bayer-Wert grundsätzlich niedriger ausfällt, wenn weiter unten liegende Schichten, d.h. näher in Richtung des Linsenelements 12, härter sind als die weiter oben, d.h. näher in Richtung der superhydrophoben Schicht 16, liegenden Schichten. Vor allem tritt dies hervor, wenn die näher an der superhydrophoben Schicht 16 liegenden Schichten zumindest eine hochbrechende Schicht 18 aufweisen, wie dies bei der Beschichtung 14 der Fall ist. Entsprechend sollte vorgesehen sein, dass eine Härte der mehreren Schichten 15 von der Hartlackschicht 20 aus in Richtung der superhydrophoben Schicht 16 zunimmt.

Dementsprechend nimmt die Hartlackschicht 20 zwischen der relativ weichen Kunststoffoberfläche und der harten Entspiegelungsschicht eine Mittelstellung bezüglich der Härte ein. Zudem stützt die Hartlackschicht 20 die Entspiegelungsschichten 18, 22.

Eine gesamte Dicke der Beschichtung 14 sollte größer als etwa 380 nm, insbesondere größer als etwa 400 nm sein. Insbesondere sollte die Beschichtung 14 ausschließlich der Hartlackschicht 20, d.h. lediglich die Schichten 16, 18, 22, bereits eine Dicke von mehr als etwa 380 nm, insbesondere mehr als etwa 400 nm aufweisen. Dadurch wird verhindert, dass die Beschichtung bei mechanischer Belastung, etwa bei einer mechanischen Belastung durch abrasive Prüfkörper im Rahmen des Bayer-Tests, einbricht und dadurch ihre schützende Funktion bzw. ihre Entspiegelungsfunktion verliert. Dabei muss die gesamte Dicke der zumindest eine hochbrechenden Schicht 18 jedoch möglichst dünn sein. Das Vorhandensein zumindest einer hochbrechenden Schicht 18 ist für einen zufriedenstellenden Entspiegelungseffekt notwendig. Um einen Bayer-Wert von > 17 zu erreichen, sollte die gesamte Dicke der zumindest einen hochbrechenden Schicht jedoch nicht größer als 40 nm, insbesondere nicht größer als 35 nm, sein. Es wurde herausgefunden, dass eine Beschädigung der zumindest einen hochbrechenden Schicht 18 zusammen mit den sie umgebenden übrigen Entspiegelungsschichten 22, z.B. durch die abrasiven Teilchen beim Bayer-Test, entsprechend der Qualität und der Quantität der Beschädigungen Gebiete mit erhöhter Streuwirkung für Licht erzeugt. Diese Streuwirkung führt je nach Beschädigung und Dicke der zumindest einen hochbrechenden Schicht 18 zu mehr oder weniger trüben Oberflächen, wodurch der durch die gesamte Beschichtung 14 erreichbare maximale Bayer-Wert niedriger wird. Durch die vorgegebene Begrenzung der maximalen Dicke der zumindest einen hochbrechenden Schicht 18 kann dieser Effekt minimiert und ein optimaler Bayer-Wert mit der gegebenen Beschichtung 14 erzielt werden.

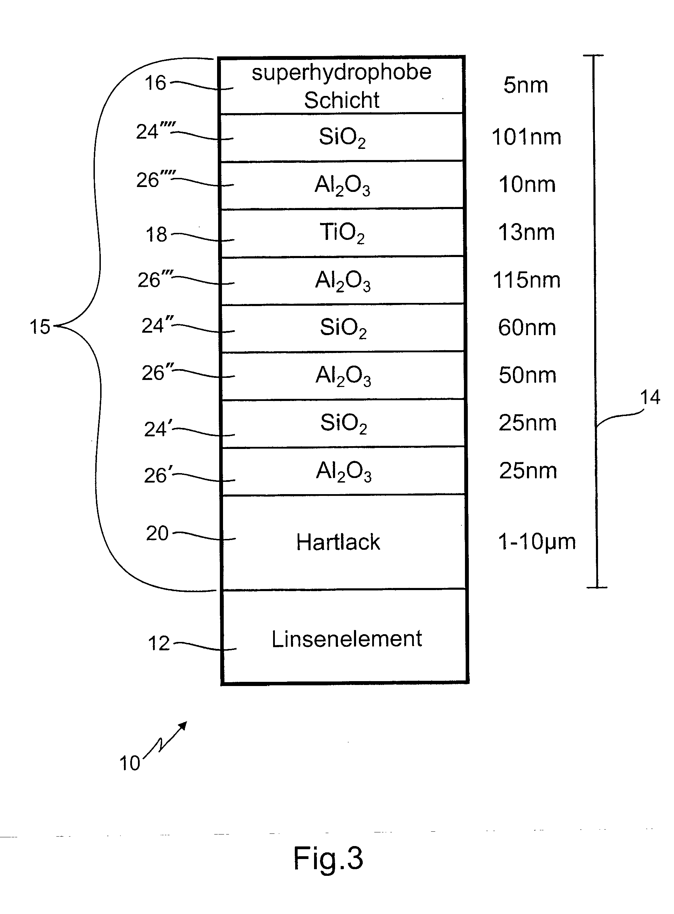

Fig. 3 zeigt eine erste Ausführungsform einer erfindungsgemäßen optischen Linse 10.

In dieser Ausführungsform ist genau eine hochbrechende Schicht 18 in der Beschichtung 14 ausgebildet, die durch Aufdampfen von Titanoxid (TiO₂) hergestellt wurde. Des Weiteren sind innerhalb der Beschichtung 14 weitere niedrigbrechende Schichten 24 vorgesehen, die aus Quarz (SiO₂) ausgebildet sind, und mittelbrechende Schichten 26 vorgesehen, die aus Aluminiumoxid (Al₂O₃) ausgebildet sind.

Auf dem Linsenelement 12 ist zunächst die Hartlackschicht 20 mit einer Dicke von 1 bis 10 µm ausgebildet. Auf der Hartlackschicht 20 ist zunächst eine Schicht 26' aus Aluminiumoxid mit einer Dicke von 25 nm angeordnet. Auf dieser wiederum ist eine Schicht 24' aus Quarz mit einer Dicke von ebenfalls 25 nm angeordnet. Auf dieser ist eine zweite Schicht 26" aus Aluminiumoxid mit einer Dicke von 50 nm angeordnet, auf der wiederum eine zweite Schicht 24" aus Quarz mit einer Dicke von 60 nm angeordnet ist. Auf diese folgt dann eine dritte Schicht 26''' aus Aluminiumoxid mit einer Dicke von 115 nm. Auf dieser dritten Schicht 26"' aus Aluminiumoxid ist die hochbrechende Schicht 18 aus Titanoxid vorgesehen, die eine Dicke von 13 nm aufweist. Die gesamte Beschichtung 14 weist genau eine hochbrechende Schicht 18 auf. Auf dieser ist wiederum eine weitere Schicht 26"" Aluminiumoxid in einer Dicke von 10 nm aufgebracht. Dieser folgt eine weitere vierte Schicht 24"" aus Quarz mit einer Dicke von 101 nm, auf der schließlich die superhydrophobe Schicht 16 mit einer Dicke von 5 nm angeordnet ist, die die Beschichtung 14 nach oben abschließt.

Durch die abwechselnde Anordnung von Schichten 24 aus Quarz und Schichten 26 aus Aluminiumoxid kann erreicht werden, dass ein intrinsischer Gesamtstress erreicht wird, der nicht zum Abplatzen der Schichten 15 führt. Dies wird vorliegend erreicht, indem sich die Schichten 26 aus Aluminiumoxid, in denen eine tensile Spannung vorherrscht, mit den Schichten 24 aus Quarz, in denen eine kompressive Spannung vorherrscht, abwechseln. Der viellagige Aufbau aus mehreren Schichten 24 und 26 wirkt somit mechanisch hinsichtlich der resultierenden Gesamtspannung günstig und trägt zum anderen zur Entspiegelungswirkung der Beschichtung 14. Grundsätzlich kann der viellagige Aufbau der Schichten 24 und 26 beliebig viele Schichten und unterschiedliche Dickenkombinationen aufweisen und ist nicht auf die dargestellten Beispiele beschränkt. Es handelt sich lediglich um bevorzugte Beispiele, die eine besonders günstige Kombination auf Entspiegelungswirkung und Bayer-Wert bereitstellen.

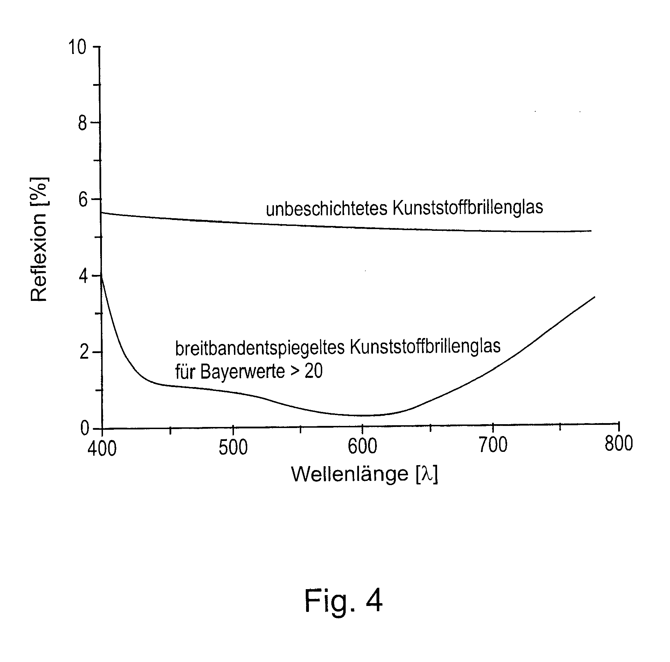

Fig. 4 zeigt eine Reflexionskurve der in Fig. 3 schematisch dargestellten optischen Linse 10. Mittels der in Fig. 3 dargestellten Beschichtung kann die erfindungsgemäße optische Linse 10 nach der ersten Ausführungsform ein Bayer-Wert von mehr als 20 erreichen. Wie der Reflexionskurve zu entnehmen ist, weist die optische Linse 10 darüber hinaus sehr gute Entspiegelungseigenschaften auf. Im sichtbaren Spektralbereich liegt der Transmissionsgrad bei mehr als 98%. Damit erfüllt die optische Linse 10 nach der ersten Ausführungsform sowohl die Anforderungen an die Entspiegelungswirkung als auch die Anforderungen an einen hohen Bayer-Wert.

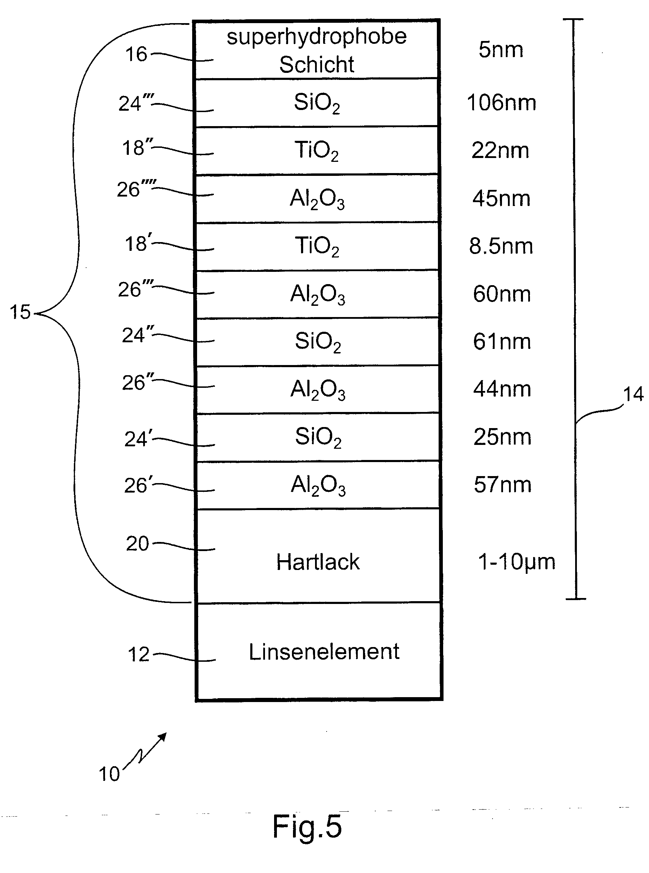

Fig. 5 zeigt die optische Linse 10 in einer zweiten Ausführungsform der vorliegenden Erfindung. Insbesondere unterscheidet sich die in Fig. 5 dargestellte Ausführungsform von der in Fig. 3 dargestellten Ausführungsform dadurch, dass die in Fig. 5 dargestellte zweite Ausführungsform zwei hochbrechende Schichten 18, 18' aufweist. Eine der beiden hochbrechenden Schichten 18' weist dabei eine Dicke von etwa 10 nm, insbesondere im vorliegenden dargestellten Beispiel genau 8,5 nm, auf. Die Dicke der anderen hochbrechenden Schicht 18 ist entsprechend so bemessen, dass die hochbrechenden Schichten 18, 18' insgesamt eine Dicke von weniger als 40 nm, insbesondere weniger als 36 nm, aufweisen. Daher ist in der in Fig. 5 dargestellten Ausführungsform die hochbrechende Schicht 18 mit einer Dicke von 22 nm ausgebildet.

In der dargestellten zweiten Ausführungsform der optischen Linse 10 ist auf dem Linsenelement 12 zunächst eine Hartlackschicht 20 mit einer Dicke von 1 bis 10 µm aufgetragen. Auf dieser befindet sich eine Schicht 26' aus Aluminiumoxid mit einer Dicke von 57 nm. Auf dieser wiederum ist eine Schicht 24' aus Quarz mit einer Dicke von 25 nm aufgebracht. Darauf befindet sich eine zweite Schicht 26" aus Aluminiumoxid mit einer Dicke von 44 nm, auf der wiederum eine zweite Schicht 24" aus Quarz mit einer Dicke von 61 nm aufgebracht ist. Auf dieser befindet sich eine dritte Schicht 26''' aus Aluminiumoxid mit einer Dicke von 60 nm. Auf dieser Schicht ist dann die erste hochbrechende Schicht 18' aus Titanoxid mit einer Dicke von 8,5 nm aufgetragen. Auf dieser findet sich wiederum eine Schicht 26"" aus Aluminiumoxid mit einer Dicke von 45 nm, auf der dann wiederum die zweite hochbrechende Schicht 18" aus Titanoxid mit einer Dicke von 22 nm aufgebracht ist. Auf dieser ist eine dritte Schicht 24''' aus Quarz mit einer Dicke von 106 nm aufgetragen und die superhydrophobe Schicht 16 mit einer Dicke von 5 nm schließt die Beschichtung 14 entgegengesetzt zu dem Linsenelement 12 nach oben ab. Auch bei einem solchen Aufbau der Beschichtung 14 können gute Bayer-Werte erzielt werden. Die in Fig. 5 dargestellte Beschichtung 14 ermöglicht es, Bayer-Werte von mehr als 17 zu erreichen.

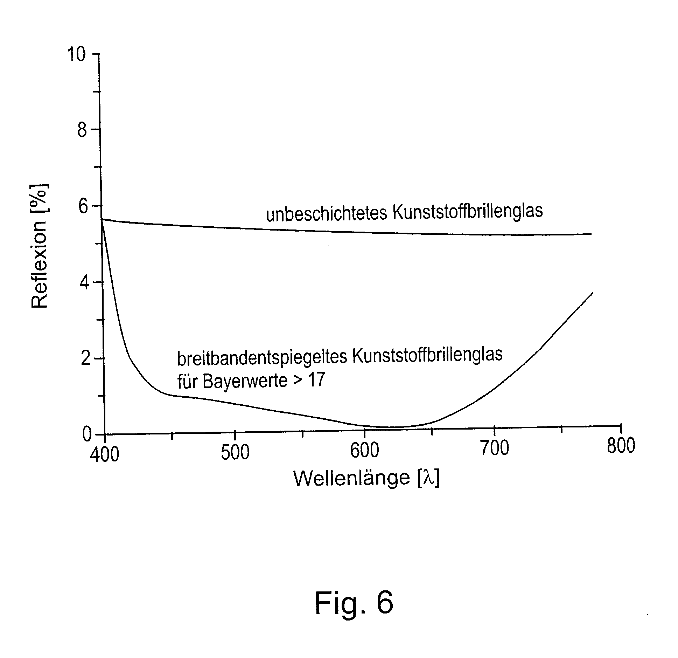

In Fig. 6 ist eine Reflexionskurve der in Fig. 5 dargestellten optischen Linse 10 abgebildet. Auch hier liegt in einem sichtbaren Spektralbereich eine gute Entspiegelungseigenschaft der optischen Linse vor, der Transmissionsgrad liegt bei mehr als 98%.

Letztlich ist mit Blick auf Fig. 3 und Fig. 5 zu erkennen, dass eine Gesamtdicke der Beschichtung 14, insbesondere auch ausschließlich der Hartlackschicht 20, in beiden Fällen größer als 400 nm ist. Des Weiteren ist vorgesehen, dass eine hochbrechende Schicht 18, 18', 18" stets zwischen zwei niedrigbrechenden Schichten 24 oder zwischen zwei mittelbrechenden Schichten 26 oder zwischen einer niedrigbrechenden Schicht 24 und einer mittelbrechenden Schicht 26 eingebettet bzw. angeordnet ist. eingebettet ist. Die hochbrechenden Schichten sind in den Beispielen der Fig. 3 und 5 aus Titanoxid hergestellt. Grundsätzlich können sie jedoch etwa auch aus Zirkoniumoxid (ZrO₂) oder Tantaloxid (Ta₂O₅) oder einem anderen der eingangs genannten Materialien hergestellt sein. Die niedrigbrechenden Schichten sind in den dargestellten Ausführungsformen aus Quarz (SiO₂) und die mittelbrechenden Schichten aus Aluminiumoxid (Al₂O₃) hergestellt. Insbesondere sind diese beiden Materialien abwechselnd verwendet, um die mechanischen Spannungen innerhalb der Beschichtung 14 auszugleichen. Alternativ kann etwa auch Magnesiumfluorid (MgF₂) als niedrigbrechendes Material vorgesehen sein.

## Patentansprüche

1. Optische Linse (10) mit einem aus, insbesondere in einem sichtbaren Spektralbereich transparenten, Kunststoff hergestellten Linsenelement (12), und mit einer mehrere Schichten (15) aufweisenden Beschichtung (14), wobei die mehreren Schichten (15) zumindest eine hochbrechende Schicht (18) aufweisen, **dadurch gekennzeichnet, dass** an das Linsenelement (12) angrenzend eine Hartlackschicht (20) ausgebildet ist, dass eine superhydrophobe Schicht (16) die Beschichtung (14) abschließt, dass die Beschichtung (14) insgesamt eine Dicke von mehr als etwa 380 nm aufweist, und dass im Fall genau einer hochbrechenden Schicht (18) die genau eine hochbrechende Schicht (18) eine Dicke von weniger als 40 nm aufweist, und im Fall von mehr als einer hochbrechenden Schicht (18) die hochbrechenden Schichten (18) zusammen eine Dicke von weniger als 40 nm aufweisen.

2. Optische Linse (10) nach Anspruch 1, **dadurch gekennzeichnet, dass** die superhydrophobe Schicht (16) aus einem Material gebildet ist, auf dem Wasser einen Randwinkel von mehr als 90° einnimmt.

3. Optische Linse (10) nach Anspruch 1 oder 2, **dadurch gekennzeichnet, dass** die Beschichtung genau eine hochbrechende Schicht (18) aufweist.

4. Optische Linse (10) nach Anspruch 3, **dadurch gekennzeichnet, dass** die hochbrechende Schicht (18) eine Dicke von weniger als 15 nm aufweist.

5. Optische Linse (10) nach Anspruch 1 oder 2, **dadurch gekennzeichnet, dass** die Beschichtung (14) zwei hochbrechende Schichten (18) aufweist.

6. Optische Linse (10) nach Anspruch 5, **dadurch gekennzeichnet, dass** eine der zwei hochbrechenden Schichten (18) eine Dicke kleiner oder gleich etwa 10 nm aufweist.

7. Optische Linse (10) nach einem der Ansprüche 1 bis 6, **dadurch gekennzeichnet, dass** die zumindest eine hochbrechende Schicht (18) aus ZrO₂, TiO₂ oder Ta₂O₅ gebildet ist.

8. Optische Linse (10) nach einem der Ansprüche 1 bis 7, **dadurch gekennzeichnet, dass** die Beschichtung (14) zumindest eine niedrigbrechende Schicht (24) und/oder zumindest eine mittelbrechende Schicht (26) aufweist.

9. Optische Linse (10) nach Anspruch 8, **dadurch gekennzeichnet, dass** die zumindest eine niedrigbrechende Schicht (24) aus SiO₂ oder MgF₂ gebildet ist.

10. Optische Linse (10) nach Anspruch 8 oder 9, **dadurch gekennzeichnet, dass** die zumindest eine hochbrechende Schicht (18) zwischen zwei niedrigbrechenden Schichten (24) oder zwischen zwei mittelbrechenden Schichten (26) oder zwischen einer niedrigbrechenden Schicht (24) und einer mittelbrechenden Schicht (26) eingebettet ist..

11. Optische Linse (10) nach einem der Ansprüche 1 bis 10, **dadurch gekennzeichnet, dass** eine Härte der mehreren Schichten (15) von der Hartlackschicht (20) aus in Richtung der superhydrophoben Schicht (16) zunimmt.

12. Optische Linse (10) nach einem der Ansprüche 1 bis 11, **dadurch gekennzeichnet, dass** zwischen einer untersten der zumindest einen hochbrechenden Schicht (18) und der Hartlackschicht (20) zumindest zwei niedrigbrechende Schichten (24) und zumindest zwei mittelbrechende Schichten (26) abwechselnd angeordnet sind.

13. Optische Linse nach einem der Ansprüche 1 bis 12, **dadurch gekennzeichnet, dass** die zumindest eine hochbrechende Schicht (18) einen Brechungsindex n > 1,65 aufweist.

14. Optische Linse nach einem der Ansprüche 8 bis 13, **dadurch gekennzeichnet, dass** die zumindest eine mittelbrechende Schicht (26) einen Brechungsindex 1,5 < n <= 1,65 aufweist, und dass die zumindest eine niedrigbrechende Schicht (26) einen Brechungsindex n <= 1,5 aufweist.

15. Optische Linse (10) nach einem der Ansprüche 1 bis 14, **dadurch gekennzeichnet, dass** die Beschichtung (14) ausschließlich der Hartlackschicht (20) insgesamt eine Dicke von mehr als etwa 380 nm aufweist.

## Claims

1. An optical lens (10) having a lens element (12) produced of plastic, more particularly of plastic which is transparent in a visible spectral range, and having a coating (14) comprising a plurality of layers (15), the plurality of layers (15) comprising at least one high-refractive-index layer (18), **characterized in that** a hardcoat layer (20) is formed adjacently to the lens element (12), **in that** a superhydrophobic layer (16) concludes the coating (14), **in that** the coating (14) overall has a thickness of more than about 380 nm, and **in that** in case of exactly one high-refractive-index layer (18), the exactly one high-refractive-index layer (18) has a thickness of less than 40 nm, and in case of more than one high-refractive-index layer (18), the high-refractive-index layers (18) together have a thickness of less than 40 nm.

2. The optical lens (10) according to Claim 1, **characterized in that** the superhydrophobic layer (16) is formed of a material on which water adopts a contact angle of more than 90°.

3. The optical lens (10) according to Claim 1 or 2, **characterized in that** the coating has precisely one high-refractive-index layer (18).

4. The optical lens (10) according to Claim 3, **characterized in that** the high-refractive-index layer (18) has a thickness of less than 15 nm.

5. The optical lens (10) according to Claim 1 or 2, **characterized in that** the coating (14) has two high-refractive-index layers (18).

6. The optical lens (10) according to Claim 5, **characterized in that** one of the two high-refractive-index layers (18) has a thickness of less than or equal to about 10 nm.

7. The optical lens (10) according to any of Claims 1 to 6, **characterized in that** the at least one high-refractive-index layer (18) is formed of ZrO₂, TiO₂ or Ta₂O₅.

8. The optical lens (10) according to any of Claims 1 to 7, **characterized in that** the coating (14) has at least one low-refractive-index layer (24) and/or at least one medium-refractive-index layer (26).

9. The optical lens (10) according to Claim 8, **characterized in that** the at least one low-refractive-index layer (24, 26) is formed of SiO₂ or MgF₂.

10. The optical lens (10) according to Claim 8 or 9, **characterized in that** the at least one high-refractive-index layer (18) is embedded between two low-refractive-index layers (24) or two medium-refractive-index-layers (26) or one low-refractive-index layer (24) and one medium-refractive-index-layer (26).

11. The optical lens (10) according to any of Claims 1 to 10, **characterized in that** a hardness of the plurality of layers (15) increases from the hardcoat layer (20) in the direction of the superhydrophobic layer (16).

12. The optical lens (10) according to any of Claims 1 to 11, **characterized in that** at least two low-refractive-index-layers (24) and at least two medium-refractive-index layers (26) are positioned in an alternating arrangement between the lowermost high-refractive-index layer (18) and the hardcoat layer (20).

13. The optical lens (10) according to any of claims 1 to 12, **characterized in that** the at least one high-refractive-index layer (18) has a refractive index of n > 1.65.

14. The optical lens (10) according to any of claims 8 to 13, **characterized in that** the at least one medium-refractive-index layer (26) has a refractive index of 1.5 < n <= 1.65 and that the at least one low-refractive-index layer (24) has a refractive index of n <= 1.5.

15. The optical lens (10) according to any of claims 1 to 14, **characterized in that** the coating (14) excluding the hardcoat layer (20) overall has a thickness of more than about 380 nm.

## Revendications

1. Lentille optique (10) présentant un élément (12) de lentille réalisé en une matière synthétique transparente en particulier dans la plage visible du spectre et un revêtement (14) qui présente une ou plusieurs couches (15),
les différentes couches (15) présentant au moins une couche (18) à haut indice de réfraction,
**caractérisée en ce que**
une couche (20) de vernis dur est formée en position adjacente à l'élément de lentille (12),
**en ce qu'**une couche super-hydrophobe (16) isole le revêtement (14),
**en ce que** le revêtement (14) présente une épaisseur totale supérieure à environ 380 nm et **en ce qu'**au cas où une seule couche (18) à haut indice de réfraction est présente, l'unique couche (18) à haut indice de réfraction présente une épaisseur inférieure à 40 nm et **en ce qu'**au cas où plusieurs couches (18) à haut indice de réfraction sont présentes, les couches (18) à haut indice de réfraction présentent ensemble une épaisseur inférieure à 40 nm.

2. Lentille optique (10) selon la revendication 1, **caractérisée en ce que** la couche super-hydrophobe (16) est formée d'un matériau sur lequel l'eau forme un angle de bordure supérieur à 90°.

3. Lentille optique (10) selon les revendications 1 ou 2, **caractérisée en ce que** le revêtement présente une seule couche (18) à haut indice de réfraction.

4. Lentille optique (10) selon la revendication 3, **caractérisée en ce que** la couche (18) à haut indice de réfraction présente une épaisseur inférieure à 15 nm.

5. Lentille optique (10) selon les revendications 1 ou 2, **caractérisée en ce que** le revêtement (14) présente deux couches (18) à haut indice de réfraction.

6. Lentille optique (10) selon la revendication 5, **caractérisée en ce que** l'une des deux couches (18) à haut indice de réfraction présente une épaisseur inférieure ou égale à environ 10 nm.

7. Lentille optique (10) selon l'une des revendications 1 à 6, **caractérisée en ce que** la ou les couches (18) à haut indice de réfraction sont formées de ZrO₂, TiO₂ ou Ta₂O₅.

8. Lentille optique (10) selon l'une des revendications 1 à 7, **caractérisée en ce que** le revêtement (14) présente au moins une couche (24) à bas indice de réfraction et/ou au moins une couche (26) à indice de réfraction moyen.

9. Lentille optique (10) selon la revendication 8, **caractérisée en ce que** la ou les couches (24) à bas indice de réfraction sont formées de SiO₂ ou de MgF₂.

10. Lentille optique (10) selon les revendications 8 ou 9, **caractérisée en ce que** la ou les couches (18) à haut indice de réfraction sont incorporées entre deux couches (24) à bas indice de réfraction, entre deux couches (26) à indice de réfraction moyen ou entre une couche (24) à bas indice de réfraction et une couche (26) à indice de réfraction moyen.

11. Lentille optique (10) selon l'une des revendications 1 à 10, **caractérisée en ce que** la dureté des différentes couches (15) augmente depuis la couche (20) de vernis dur en direction de la couche super-hydrophobe (16).

12. Lentille optique (10) selon l'une des revendications 1 à 11, **caractérisée en ce qu'**au moins deux couches (24) à bas indice de réfraction et au moins deux couches (26) à indice de réfraction moyen sont disposées en alternance entre la plus basse des différentes couches (18) à haut indice de réfraction et la couche (20) de vernis dur.

13. Lentille optique (10) selon l'une des revendications 1 à 12, **caractérisée en ce que** la ou les couches (18) à haut indice de réfraction présentent un indice de réfraction n > 1,65.

14. Lentille optique (10) selon l'une des revendications 8 à 13, **caractérisée en ce que** la ou les couches (26) à indice de réfraction moyen présentent un indice de réfraction 1,5 < n ≤ 1,65 et **en ce que** la ou les couches (26) à bas indice de réfraction présentent un indice de réfraction n ≤ 1,5.

15. Lentille optique (10) selon l'une des revendications 1 à 14, **caractérisée en ce que** le revêtement (14) présente en dehors de la couche (20) de vernis dur une épaisseur globale supérieure à environ 380 nm.
